# EUROPEAN PATENT APPLICATION

(11) **EP 1 205 892 A1**
(43) Date of publication of application: **15.05.2002**
(21) Application number: 00310063.3
(22) Date of filing: 13.11.2000
(51) Int. Cl.: G07F 17/26, G06T 5/00, H04N 5/262

(54) **Automatic vending machine for portrait and caricature printed articles**

(71) Applicant: Mega Feel Co., Ltd., Songpa-ku, Seoul (KR)
(72) Inventor: Kim, J. S., 81-5 Okum-Dong Songpa-ku Seoul (KR)
(74) Representative: Jenkins, Peter David

(57) **Abstract**

An automatic vending machine (100) for a portrait or caricature printed article, the vending machine (100) having a camera (130) for receiving input image data, a monitor (110,112) for displaying a predetermined selected image for viewing by the user, and inputting means (140) allowing the user to edit the input image data and to optionally execute desired operations, a memory (150) in which data of an operating system program and a program for portrait and caricature processing is stored, and a printer (160) for selectively outputting portrait and caricature printed articles printed with an output image obtained by portrait or caricature processing of the input image data, characterised in that the program for portrait and caricature processing is arranged to modify the input image data to produce output image data by at least one of: (a) removing the most bright and the most shaded portions of the input image data; (b) enhancing the output image by enhancing the difference between light and shade boundaries of the input image by creating an artificial outline between the light and shade boundaries; (c) combining the input image data with (i) a selected pen style texture whereby the output image simulates a selected pen style and (ii) a bump texture whereby outlines of the output image are reduced in resolution; and (d) processing the input image data as three primary colours and mixtures thereof and providing a desired colour depth and contrast in the output image data dependent upon the selected pen style texture.

## Description

The present invention relates to an automatic vending machine for photograph printed stickers or sheets, and more particularly, to an automatic vending machine for a sticker combinable portrait or caricature printed article, for receiving image data of a user by means of a camera or the like, editing the same according to user's option and outputting the edited image data on a sheet or sticker paper.

In general, a conventional automatic vending machine for stickers receives image data of a user by means of an image pickup unit such as a camera and edits the image data with a previously stored background image to then be output on sticker paper. The conventional automatic vending machine outputs only a multitude of small sized stickers on which photographs are printed. Thus, the conventional sticker vending machine cannot satisfy users' various choices.

EP-A-0932120 discloses a device for simulating the creation of an artist's drawing or painting.

It is an object of the present invention to provide an automatic vending machine for a sticker combinable caricature printed article, for outputting not only a stamp-sized sticker but also a caricature of a user on A4 size paper, for sale.

To accomplish the above object of the present invention, there is provided an automatic vending machine for a portrait or caricature printed article, the vending machine having a camera for receiving input image data, a monitor for displaying a predetermined selected image for viewing by the user, and inputting means allowing the user to edit the input image data and to optionally execute desired operations, a memory in which data of an operating system program and a program for portrait and caricature processing is stored, and a printer for selectively outputting portrait and caricature printed articles printed with an output image obtained by portrait or caricature processing of the input image data, characterised in that the program for portrait and caricature processing is arranged to modify the input image data to produce output image data by at least one of: (a) removing the most bright and the most shaded portions of the input image data; (b) enhancing the output image by enhancing the difference between light and shade boundaries of the input image by creating an artificial outline between the light and shade boundaries; (c) combining the input image data with (i) a selected pen style texture whereby the output image simulates a selected pen style and (ii) a bump texture whereby outlines of the output image are reduced in resolution; and (d) processing the input image data as three primary colours and mixtures thereof and providing a desired colour depth and contrast in the output image data dependent upon the selected pen style texture.

Preferably, the program for portrait and caricature processing is arranged to modify the input image data to produce output image data by the combination of: (b) enhancing the output image by enhancing the difference between light and shade boundaries of the input image by creating an artificial outline between the light and shade boundaries; (c) combining the input image data with (i) a selected pen style texture whereby the output image simulates a selected pen style and (ii) a bump texture whereby outlines of the output image are reduced in resolution; and (d) processing the input image data as three primary colours and mixtures thereof and providing a desired colour depth and contrast in the output image data dependent upon the selected pen style texture.

Preferably, the program for portrait and caricature processing is further arranged to produce the output image data by (e) modifying the input image data to remove the most bright and the most shaded portions of the input image data.

Preferably, the program for portrait and caricature processing is further arranged to produce the output image data by (f) modifying the input image data by warping.

Preferably, the program for portrait and caricature processing is arranged selectively to produce the output image data by all of steps (a) to (f) .

Embodiments of the present invention will now be described by way of example only, with reference to the accompanying drawings, in which:-
Fig. 1 is a perspective view of an automatic vending machine for a portrait or caricature printed article according to the present invention;
Fig. 2 is a perspective view illustrating the state in which the automatic vending machine shown in Fig. 1 is installed;
Fig. 3 is a block diagram of the automatic vending machine according to the present invention;
Fig. 4 is a flow diagram for explaining the operation of the automatic vending machine according to the present invention;
Fig. 5 is a flow diagram showing a sequence of sub-steps in a step of the flow diagram of Fig. 4;
Fig. 6 shows how the light and shade differences in the input image are modified to produce the output image;
Figs. 7 and 8 show typical texture images for use in the pen style texture mapping process;
Figs. 9 and 10 show changes made to the output image in the overlapping pen style texture mapping and bump mapping processes respectively; and
Figs. 11 through 13 are graphic representations of caricature printed articles produced by the automatic vending machine according to the present invention.

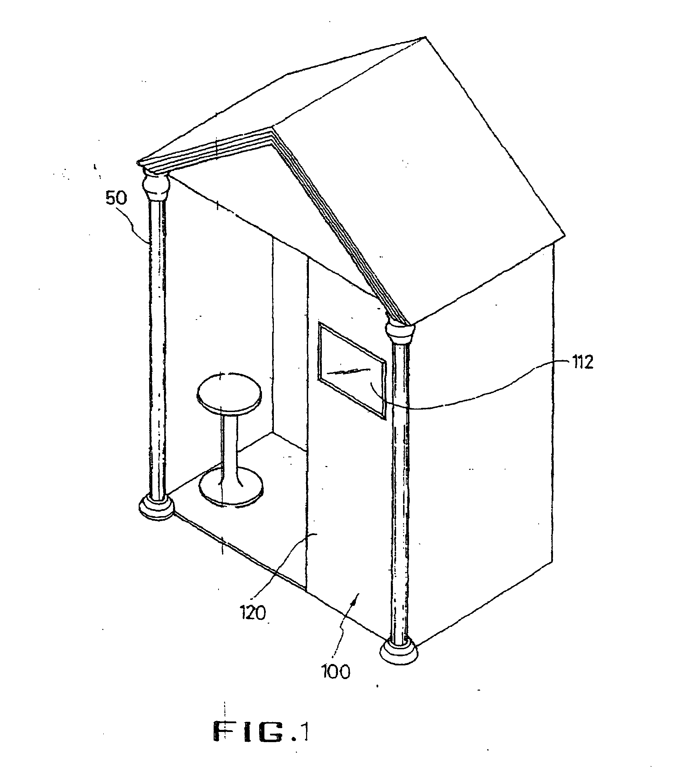

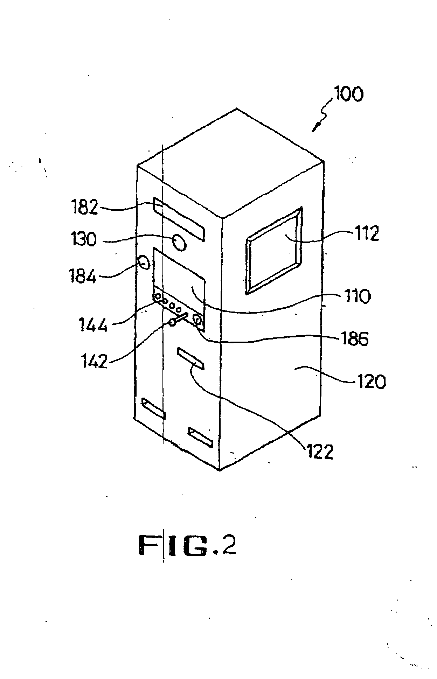

Referring to Figures 1 and 2, the automatic vending machine 100 is installed within a frame member 50 made of fiber glass-reinforced plastic (FRP), and an external monitor 112 is configured so as to be viewed by passers-by in the state where the automatic vending machine 100 is installed.

As shown in Figures 1 and 2, the automatic vending machine 100 for a sticker combinable portrait or caricature printed article according to the present invention includes a housing 120. The housing 120 provides a space required for installing necessary components.

A money identifier 122 is installed in the housing 120. The money identifier 122 allows only a person who paid a predetermined amount of money to use the automatic vending machine 100. Here, "money" is generally termed to cover coins, bills, credit cards and electronic money. The money identifier 122 allows a normal user who complies with a prescribed procedure to use the automatic vending machine 100.

The automatic vending machine 100 according to the present invention also includes a camera 130. The camera 130 is preferably installed inside the housing 120 such that only a lens is exposed outside. The camera 130 is a device for receiving necessary image data, that is, image data of a user, and a closed circuit television (CCTV) camera, a digital camera, a video camera or the like can be used as the camera 130.

The housing 120 includes two monitors 110 and 112. The monitor 110 installed around the center of the front face of the housing 120, is a monitor for viewing by the user. The monitor 112 installed around the upper portion of the lateral face of the housing 120, is a monitor for viewing by passers-by. The monitors 110 and 112 may be configured to simultaneously display an identical image using a monitor distribution device. A user-operated inputting means 140 is installed on the front face of the lower portion of the monitor 110. The inputting means 140 allows the user to edit input image data and to optionally execute desired operations, and examples thereof include a joy pad consisting of a joy stick 142 and buttons 144. The buttons 144 are at least four, and examples thereof include a button used for the money identifier 122, an OK button, a button for determination of money to be paid, and a button for being used in the event of system failure.

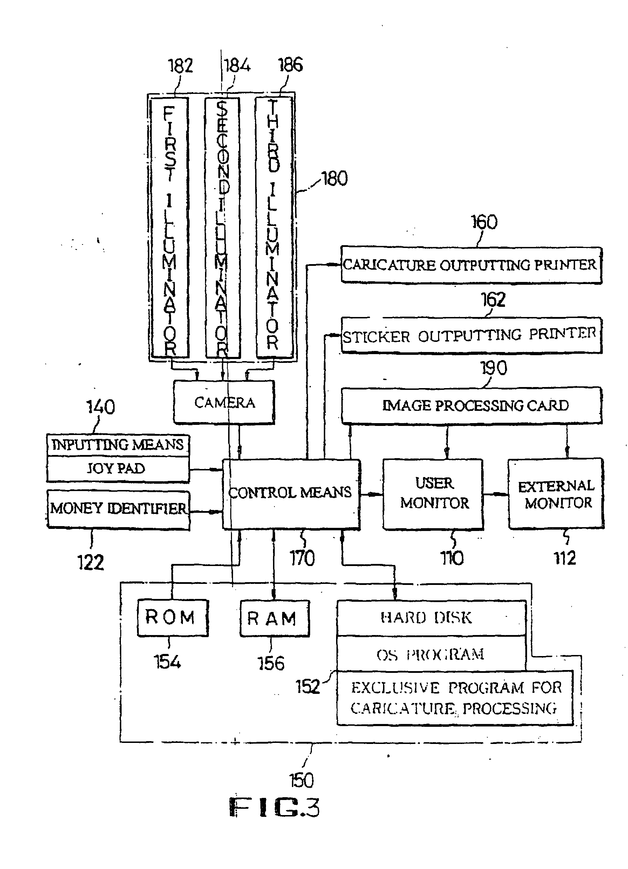

As shown in Figure 3, the automatic vending machine 100 according to the present invention includes a memory means 150 having a hard disk 152 in which data such as an operating system program or an exclusive program for portrait or caricature processing, is stored, a read only memory (ROM) 154 in which data necessary for operating the other programs is stored, and a random access memory (RAM) 156 used as a main memory device.

A program necessary for processing images is proposed by the inventor of the present invention. According to the image processing program, images can be processed by selecting paint tools including charcoal, pen or paintbrush, and painting methods for providing the feeling of watercolour painting, oil painting, pastel painting, colour-pencil painting, crayon-pastel painting and so on. In addition, the user may select a preferred artist's style of painting, for example, the style of Vincent van Gogh, Amedeo Modigliani, Edgar Degas or Pierre-Auguste Renoir.

The automatic vending machine 100 according to the present invention includes a portrait or caricature outputting printer 160 and a sticker outputting printer 162. The portrait or caricature outputting printer 160 is for outputting the image data received by the camera 130 and applied to the exclusive program for portrait or caricature processing as a portrait or caricature printed article. The sticker outputting printer 162 is for outputting the image data received by the camera 130 on sticker paper. Here, a laser printer is suitably used as the portrait or caricature outputting printer 160 and an ink-jet colour printer is suitably used as the sticker outputting printer 162.

The automatic vending machine 100 according to the present invention includes a control means 170 for controlling the operation of the respective elements which have been described above.

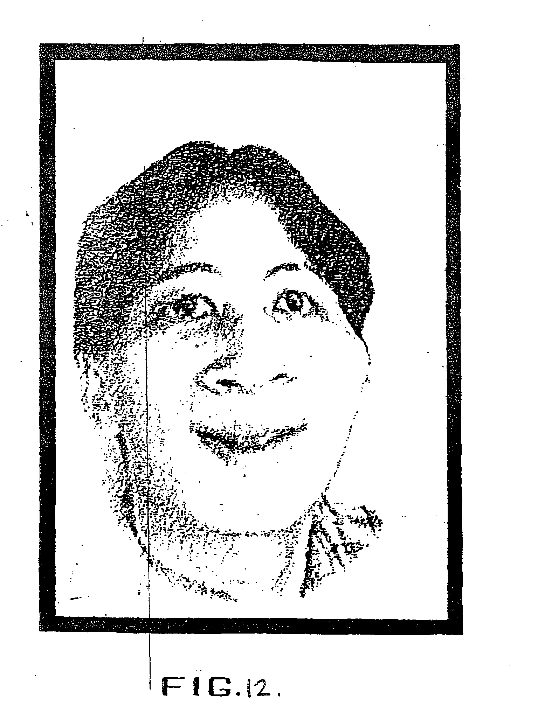

As shown in Figure 1, in the housing 120, an illuminator unit 180 including a first illuminator 182 through a third illuminator 186 for processing shades of the portrait or caricature is further provided around the camera 130. The illuminator unit 180 is provided for processing shades of the portrait or caricature in a user's desired manner. Illuminated portions are brightly expressed and non-illuminated portions are darkly expressed, which can be appreciated by caricature outputs shown in Figures 11 through 13. Undefined reference numeral 190 denotes an image processing card.

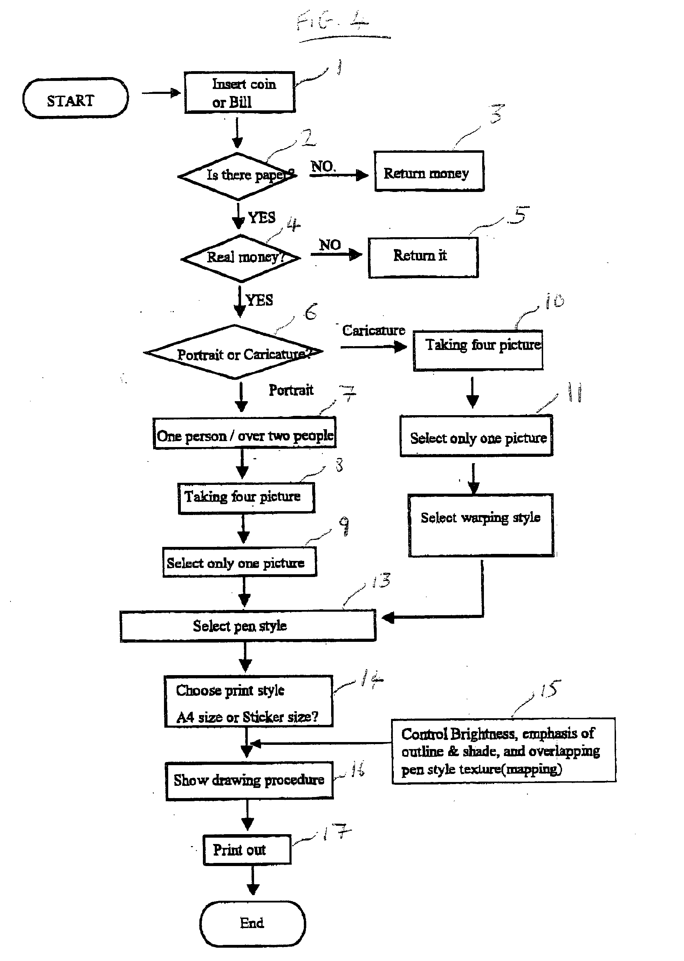

Figure 4 is a flow diagram for explaining the operation of the automatic vending machine for a portrait or caricature printed article according to the present invention.

In other words, one who intends to use the automatic vending machine 100 according to the present invention inserts money into the money identifier 122 (step 1). It is checked that there is paper in the machine for printing the article (step 2), and if not the money is returned (step 3).

It is checked whether the money is a counterfeit or not (step 4). If the money is a counterfeit, the money is returned (step 5). If not, either a caricature or portrait printed article or a corresponding sticker is selected from the menu displayed on the monitor 110 by the user as desired (step 5).

In the case where the portrait is selected, the number of people to be photographed is then selected (step 7). Then, four photographs are taken (step 8) and a user's preferred one is selected (step 9).

In the case where the caricature printed article is selected, four photographs are taken (step 10) and a user's preferred one is selected (step 11). Then, a warping style is selected (step 12). Examples of the warping style include a face with a smile, a face with anger, a tearful face, a face with only the nose elongated, and so on, and any of the user's desired style can be selected.

Then, for both the portrait and caricature modes a user's desired pen style is selected (step 13) and the type of an output article is selected (step 14). The pen style can be variably selected by using the program which has choices of pen, charcoal; contact, pencil or paintbrush. If necessary, a program which allows selection of another paint tool may be used. For example, the painting methods for generating colour images for providing the feeling of water-colour painting, oil paint, pastel painting, colour-pencil painting, crayon-pastel painting or the like, can be selected.

In accordance with various preferred aspects of the present invention, the computer program then, in step 15, controls the lightness, emphasises outlines and shade, provides warping and/or provides an overlapping pen style texture by a mapping process, each in a manner as described further hereinbelow.

The type of an output article includes a portrait or caricature printed on A4 size paper or a sticker. Also, the output article may be printed on decal or T-shirt. Otherwise, the portrait or caricature can be printed on A4 paper. Now, the process of drawing a portrait or caricature using the selected pen style is simultaneously displayed on the monitors 110 and 112 (step 16). The image data applied to the portrait or caricature drawing process or the photographed or captured image data is selectively printed on the portrait or caricature outputting printer or the sticker outputting printer in the form of a portrait or caricature printed on A4 paper or T-shirt or a sticker printed on sticker paper or T-shirt (step 17).

If necessary, image data can be obtained by adjusting the illumination of the respective illuminators according to the user's option.

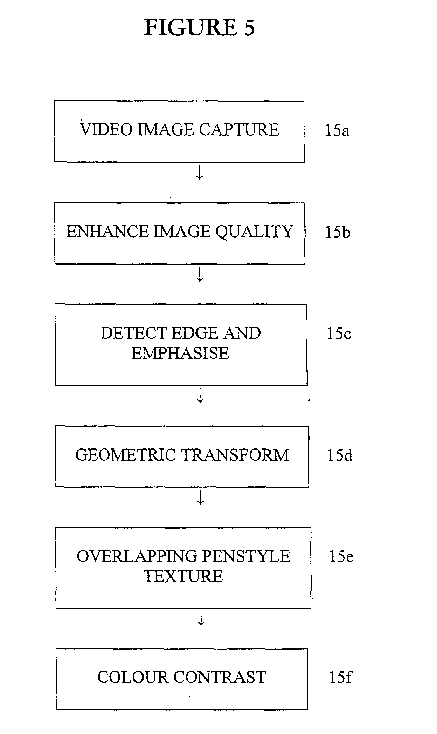

Figure 5 shows step 15 in greater detail, including a series of sub-steps 15a, 15b, 15c, 15d, 15e and 15f.

In step 15a the video image is captured by the camera 130 and the image is processed as a digital image of light, shade and colour.

In step 15b, brightness control is achieved by removing the most shaded and most bright portions of the input digital image. Assuming that the brightness of the digital image ranges from 1 to 100%, in accordance with the particularly preferred embodiment 25% of the upper brightness portion and 25% of the lower brightness portion of the digital input image are removed to reproduce an output digital image with a brightness range as a band of from 25 to 75%. Thus the most shaded and most bright parts of the input digital image are removed in forming the output digital image. Accordingly, portraits and caricatures can be satisfactorily produced with respect to face colours depending on the pigment of the skin of the person, or the brightness of the surroundings.

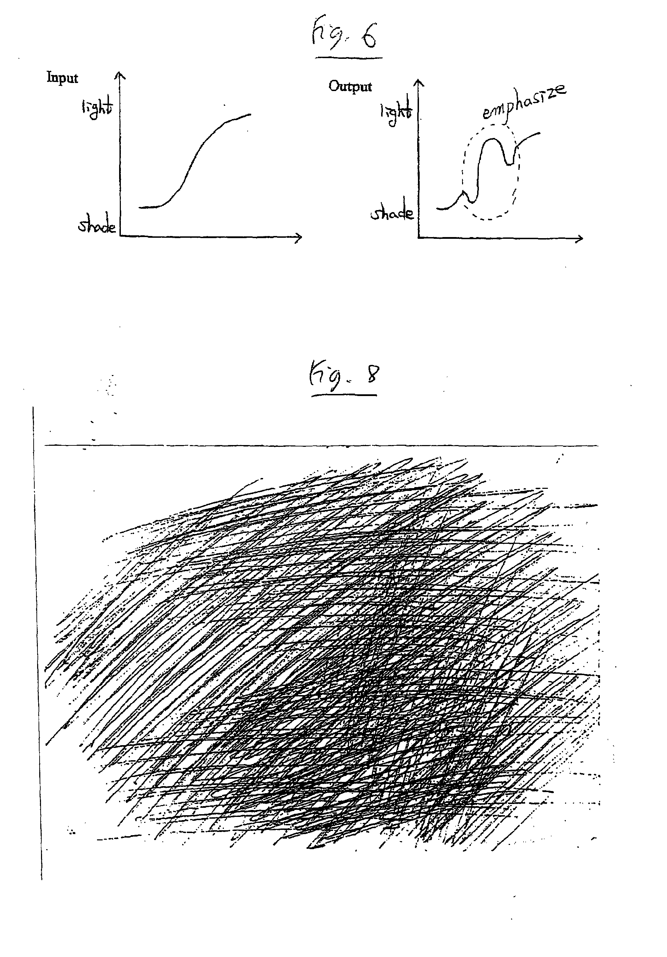

Then in step 15c, the image quality is enhanced, in particular by controlling the outline of the image and the emphasis between light and shade. For a cartoon drawing style, the outline of objects tends to be described by lines and the difference between light and shade is more emphasised. To achieve the same result when producing caricatures and portraits in accordance with the invention, an outline method for emphasising the light and shade boundaries of the input digital image is employed. Referring to Figure 6, this drawing shows how the variation between light and shade of the input image is modified in producing the output image. It may be seen from Figure 6 that the output image emphasises the difference between light and shade. This is achieved by creating an artificial outline by combining generated vertical and horizontal outlines which have been generated by the computer program. The function for detecting the horizontal outline is set out in Expression 1 and the vertical outline is created in the same way.

### (Expression 1)

### A. Get horizontal variance

si : source image :
oi : output image :
oi = fhv(si)
fhv(si) :
m : median value of color depth :
vl = (si[-1] - si[1] + m) :
return vl :

### B. Get horizontal transition

si : source image :
oi : output image
oi = fhv(si)
fhv(si) :
r: color depth :
vl = (r + si[1]- si[-1] / 2 :
return v1 :

### C. Emphasise horizontal edge

si : source image :
oi : output image :
oi : f_edge(si)
f_edge(si) :
m: median value of color depth :
e: emphasize edge factor
hv=fhv(si) : // get horizontal variance
ht=fht(hv) : // get horizontal transition
return (si + (ht - m) * e ) :

For step 15d, the digital input image may be subjected to a geometric transformation, namely a warping style. This changes the facial expressions of the subject imaginarily, for example from an angry expression to a smile expression and/or from enlarging to reducing the face length and width. Furthermore, desirable facial expressions are produced by changing the eyes, nose, mouth, face outline etc., thereby to reflect a particular artist's style of painting, as discussed hereinabove.

In step 15e, the input digital image is additionally modified with an overlapping pen style texture in order to produce portraits having a texture such as the use of a pen, brush, charcoal, pencil, etc.. The texture and shade of a selected pen style, which has been selected in step 13, of the original input image are emphasised by a mapping process combining pen style texture mapping and bump mapping with each other.

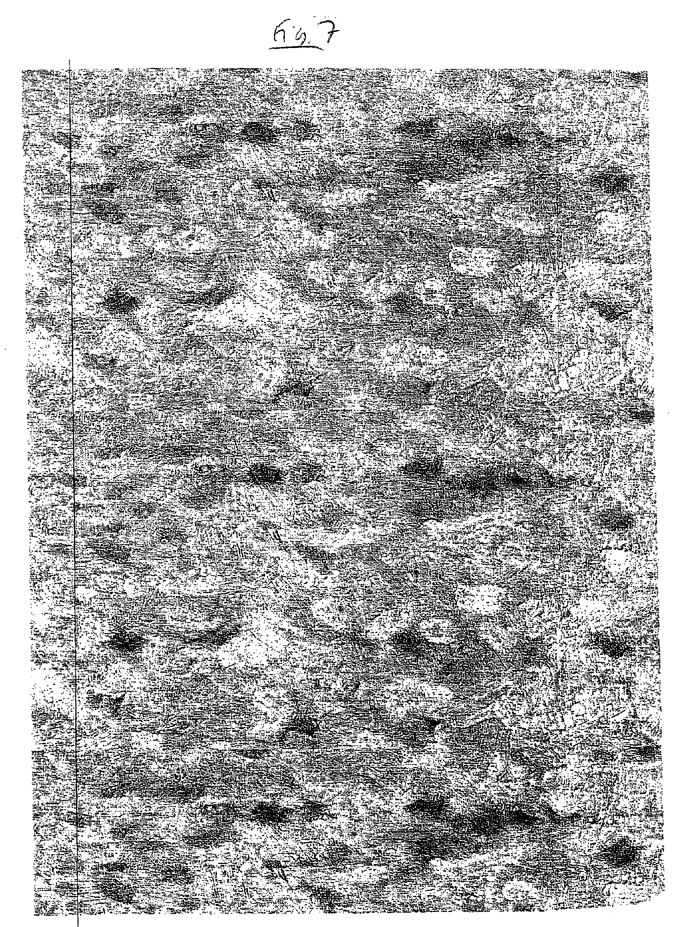

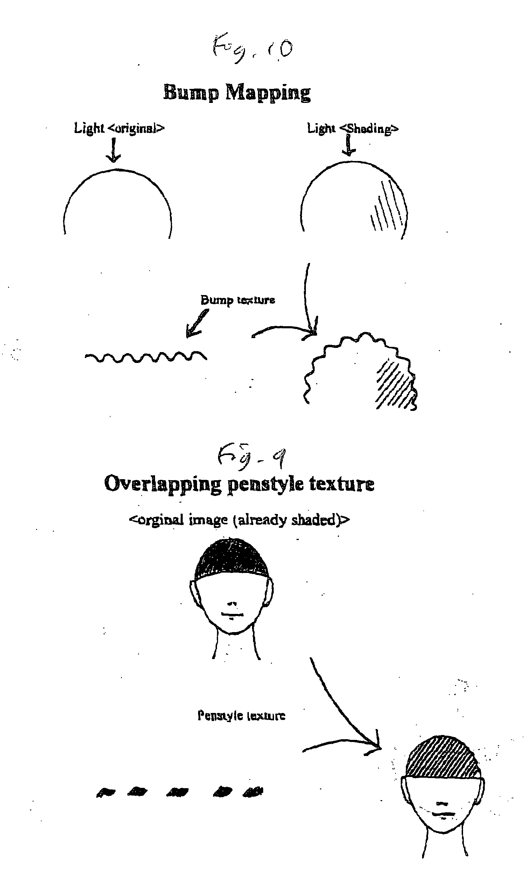

In the pen style texture mapping process, the original shaded image is changed to one of the four selected kinds of pen style. In the overlapping pen style texture method, the original image is combined with a selected pen style texture to provide the requisite texture of the image to simulate the image having been produced by painting, for example oil painting or water colour painting, or by a pen, charcoal, crayon, etc.. For example, as shown in Figures 7 and 8, the pen style texture may be for simulation of an oil painting or a pen drawing respectively.

As shown in Figure 9, in accordance with the overlapping pen style texture method, shaded areas of the input image are provided with the selected texture.

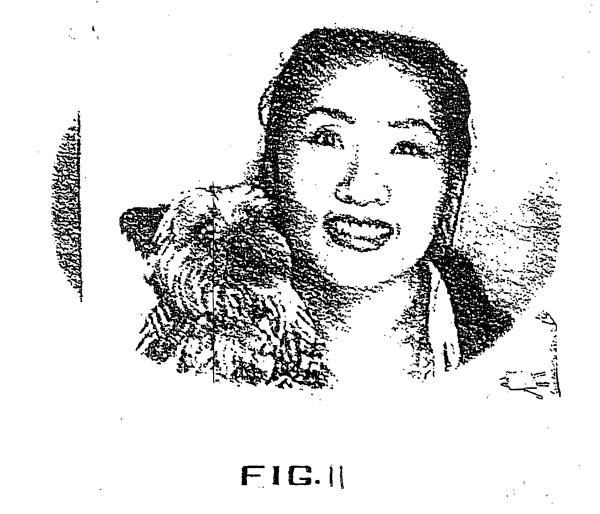

As shown in Figure 10, in the additionally employed bump mapping method, the original shaded image is simplified to reduce the number of pixels defining the image, while maintaining the same definition of the final printed article. This is illustrated in Figure 10 where it may be seen that a bump texture is mapped on to outlines. This "roughens" (i.e. reduces the image resolution of) the edge of an image and, together with the underlying pen style texture, more convincingly simulates the use of an artist's hand to create the output image, rather than a photograph.

The mapping process is represented by the Expression 2 set out below.

### (Expression 2)

Psuedo code of 'overlapping pen style texture'
si : source image :
oi : output image :
pt : pen style texture :
oi = f_opt(si, pt)
f_opt(si, pt) :
m : median value of color depth :
e : emphasize line factor :
b : brightness factor :
r : color depth :
t = (si - m) / e : //
a = 1-(si - m) / (m + t) :
x = (r - m) / b :
y = r * (1 - a) :
v1 = a * (pt - x) + y :
return (v1 * r / (r - (si - m) / 4) ) :

Step 15f establishes a colour contrast in the final image. Although the original input image is in full colour, the three primary colours of red, blue and green and a mixture of these colours are used in accordance with the invention for putting colour onto the patterned output image, instead of real image colour. Both for portrait and caricature output, Expressions 1 and 2 are converted into Expression 3 as set out below before realising the required colour contrast and depth of colour. This ensures that depending upon the selected pen style, the correct colour contrast for the selected pen style, for example water colour painting, oil painting, pen, crayon, etc.. is simulated in the output image.

### (Expression 3)

si : source image :
oi : output image
pt : pen style texture :
y = R(x) : red value of x
y = G(x) : green value of x
y = B(x) : bule value of x
oi = f_opt_color(si, pt)
f_opt_color(si, pt):
{
R(si)=f_opt( R(si) ) :
G(si)=f_opt( G(si) ) :
B(si)=f_opt( B(si) ) :
}
*Emphasis of color horizontal
si : source image
oi : output image
y = f_gray(x) : RGB to grayscale function
y = R(x) : red value of x
y = G(x) : green value of x
y = B(x) : bule value of x
oi = f_edge_colre(si)
f_edge_color(si) :
m : median value of color depth :
g = f_gray(si) :
e = f_edge(g) :
R(si) = R(si) + e - m :
G(si) = G(si) + e - m :
B(si) = B(si) + e - m :

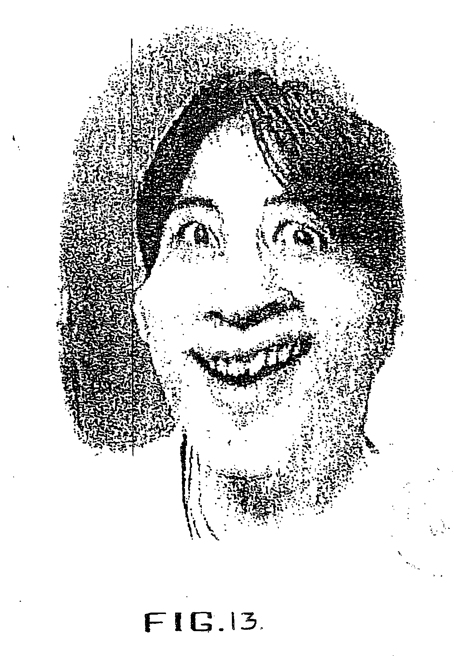

Figures 11 through 13 illustrate caricature printed articles produced by the automatic vending machine according to the present invention. Specifically, Figure 11 shows an ordinary caricature of a person. Figure 12 shows that the central portion of the person's face is warped, and Figure 13 shows an appropriately emphasised contour of the person's face.

As described above, according to the automatic vending machine for a sticker combinable portrait or caricature printed article of the present invention, not only a sticker on which a face of a user is photographed by also a portrait or caricature printed article printed on A4 size paper can be obtained, thereby satisfying user's various choices. According to user's option, a portrait or caricature printed sticker can also be obtained.

Although the invention has been described with reference to certain preferred embodiments, many other variations and uses are possible. For example, the automatic vending machine for sticker combinable portrait or caricature printed article according to the present invention can be applied to the filed of automatic or portable photography booths having an amusement value.

## Claims

1. An automatic vending machine for a portrait or caricature printed article, the vending machine having a camera for receiving input image data, a monitor for displaying a predetermined selected image for viewing by the user, and inputting means allowing the user to edit the input image data and to optionally execute desired operations, a memory in which data of an operating system program and a program for portrait and caricature processing is stored, and a printer for selectively outputting portrait and caricature printed articles printed with an output image obtained by portrait or caricature processing of the input image data, **characterised in that** the program for portrait and caricature processing is arranged to modify the input image data to produce output image data by at least one of: (a) removing the most bright and the most shaded portions of the input image data; (b) enhancing the output image by enhancing the difference between light and shade boundaries of the input image by creating an artificial outline between the light and shade boundaries; (c) combining the input image data with (i) a selected pen style texture whereby the output image simulates a selected pen style and (ii) a bump texture whereby outlines of the output image are reduced in resolution; and (d) processing the input image data as three primary colours and mixtures thereof and providing a desired colour depth and contrast in the output image data dependent upon the selected pen style texture.

2. An automatic vending machine according to claim 1 wherein the program for portrait and caricature processing is arranged to modify the input image data to produce output image data by the combination of: (b) enhancing the output image by enhancing the difference between light and shade boundaries of the input image by creating an artificial outline between the light and shade boundaries; (c) combining the input image data with (i) a selected pen style texture whereby the output image simulates a selected pen style and (ii) a bump texture whereby outlines of the output image are reduced in resolution; and (d) processing the input image data as three primary colours and mixtures thereof and providing a desired colour depth and contrast in the output image data dependent upon the selected pen style texture.

3. An automatic vending machine according to claim 1 or claim 2 wherein the program for portrait and caricature processing is further arranged to produce the output image data by (e) modifying the input image data to remove the most bright and the most shaded portions of the input image data.

4. An automatic vending machine according to any foregoing claim wherein the program for portrait and caricature processing is further arranged to produce the output image data by (f) modifying the input image data by warping.

5. An automatic vending machine according to any foregoing claim wherein the program for portrait and caricature processing is arranged selectively to produce the output image data by all of steps (a) to (f)
